# FASCICULE DE BREVET EUROPEEN

(11) **EP 3 346 174 B1**
(45) Date de publication et mention de la délivrance du brevet: **22.07.2020**
(21) Numéro de dépôt: 17211213.8
(22) Date de dépôt: 29.12.2017
(51) Int. Cl.: F16L 27/10, F16L 27/113

(54) **DISPOSITIF DE RACCORD ETANCHE DESTINE A VEHICULER UN FLUIDE**
DICHTE ANSCHLUSSVORRICHTUNG ZUM FÖRDERN EINER FLÜSSIGKEIT
SEALED CONNECTION DEVICE FOR CONVEYING A FLUID

(30) Priorité: 09.01.2017 FR 1750188
(43) Date de publication de la demande: 11.07.2018
(73) Titulaire: HUTCHINSON, 75008 Paris (FR)
(72) Inventeur: GARCIA, Antony, 45700 Villemandeur (FR); BERNARD, Christophe, 45700 Villemandeur (FR); DROUVROY, Jacques, 45120 Corquilleroy (FR); LEBRE, Régis, 45700 Villemandeur (FR)
(74) Mandataire: Gevers & Orès

(56) Documents cités:
- EP-A1- 0 990 829
- EP-A1- 1 600 681
- WO-A1-2015/196280
- FR-A- 1 580 462
- FR-A5- 2 190 239

## Description

L'invention concerne un dispositif de raccord étanche destiné à véhiculer un fluide.

Plus précisément, l'invention concerne un tel dispositif de raccord destiné d'une part, à être connecté à un tube et d'autre part, à être emmanché sur une connexion d'un organe comportant ledit fluide.

Cet organe peut être, à titre d'exemples non limitatifs, un réservoir, un autre tube, une pompe ou un refroidisseur.

Un tel dispositif de raccord permet le transfert de fluide entre l'organe, par exemple un réservoir, et le tube.

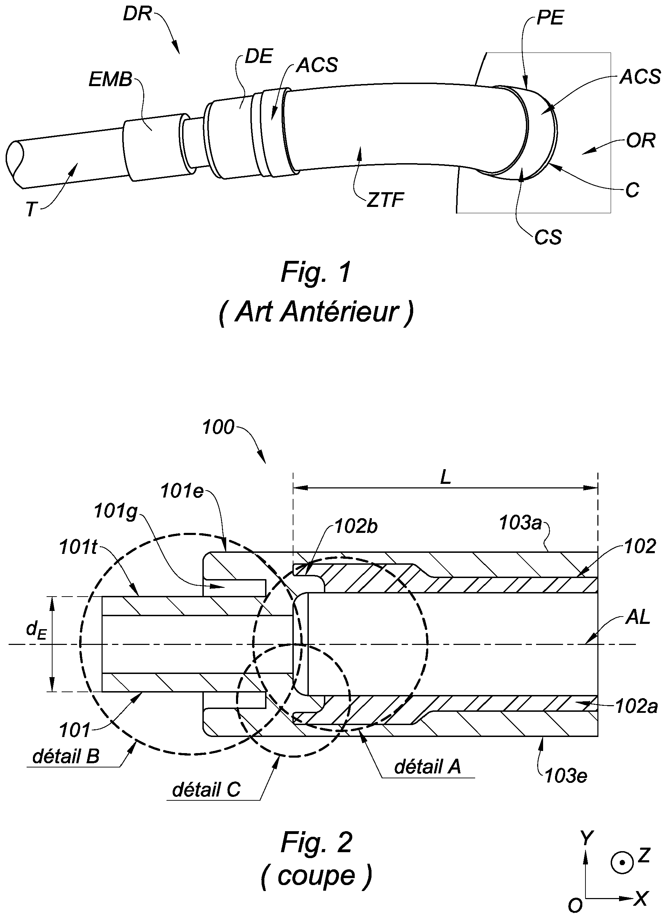

La figure 1 représente un tel dispositif de raccord selon l'état de la technique, une fois connecté au tube et sur la connexion d'un organe formant réservoir.

Le dispositif de raccord DR comprend une zone tubulaire flexible ZTF, en l'occurrence réalisée en un matériau élastomère.

Une première extrémité PE de cette zone tubulaire flexible ZTF est emmanchée dans une connexion C (dont seule une partie est visible sur la figure 1) de l'organe OR. La connexion C de l'organe OR est réalisée en un matériau plus rigide que celui de l'élastomère formant la zone tubulaire flexible ZTF, par exemple avec un matériau plastique. Pour s'assurer que l'emmanchement de la zone tubulaire flexible ZTF sur la connexion C de l'organe OR soit maintenu en utilisation, par ailleurs de façon étanche, notamment sous l'effet d'un fluide sous pression, il est prévu un collier de serrage CS au niveau de la première extrémité PE de la zone tubulaire flexible ZTF qui permet de maintenir la zone tubulaire flexible ZTF sur la connexion C de l'organe OR.

Une deuxième extrémité DE de cette zone tubulaire flexible ZTF est emmanchée autour d'un embout EMB. L'embout EMB est réalisé en un matériau plus rigide que celui qui forme la zone tubulaire flexible ZTF, par exemple avec un matériau plastique. Cet embout EMB comporte plus précisément deux extrémités, dont l'une est emmanchée à l'intérieur de la zone tubulaire flexible ZTF au niveau de sa deuxième extrémité DE et dont l'autre est soudée sur un tube T, ce dernier étant généralement réalisé avec un matériau thermoplastique (TP) ou élastomère thermoplastique (TPE), donc dans un matériau plus rigide que celui formant la zone tubulaire flexible ZTF. Pour s'assurer que l'emmanchement de la zone tubulaire flexible ZTF sur l'embout EMB soit maintenu en utilisation, par ailleurs de manière étanche notamment sous l'effet d'un fluide sous pression, il est prévu un autre collier de serrage ACS au niveau de la deuxième extrémité DE de la zone tubulaire flexible ZTF, qui permet de maintenir la zone tubulaire flexible ZTF sur la première extrémité de l'embout EMB. Par ailleurs, la jonction entre l'embout EMB et le tube T assure également un bon maintien en utilisation et une étanchéité au fluide. Cette jonction peut être effectuée, à titre d'exemples non limitatifs, par soudure, collage ou emmanchement à force.

Un tel dispositif de raccord est tout à fait efficace.

En effet, il apporte de la flexibilité grâce à la zone tubulaire flexible pour s'adapter aux pressions (implique, en utilisation, un allongement de la zone tubulaire flexible) et température impliquées par la circulation d'un fluide (fluage, lequel implique, en utilisation un allongement de la zone tubulaire flexible). Il apporte également une étanchéité avec des composants externes au dispositif de raccord (à savoir notamment tube et organe), à l'aide de colliers de serrage prenant appui contre des éléments plus rigides que la zone tubulaire flexible (à savoir embout séparé et connecteur de l'organe).

C'est pourquoi, il est largement utilisé.

Il nécessite néanmoins, en plus de la zone tubulaire flexible ZTF, un embout EMB séparé, entre la zone tubulaire flexible ZTF et le tube T, et deux colliers de serrage CS, ACS pour finalement réaliser la connexion entre l'organe OR et le tube T.

Cela implique également, lors du montage, un certain nombre d'étapes : emmanchement de la zone tubulaire flexible ZTF sur la connexion C de l'organe OR, serrage avec le collier CS, emmanchement de l'embout EMB dans la zone tubulaire flexible ZTF, serrage avec un autre collier ACS puis, soudage du tube dans l'embout EMB.

Le document EP 0 990 829 A1 montre un tel dispositif de raccord.

Un objectif de l'invention est de proposer un dispositif ne présentant pas l'un au moins des inconvénients précités.

A cet effet, l'invention propose un dispositif de raccord destiné à véhiculer un fluide, caractérisé en ce qu'il comporte :
- un embout destiné à être connecté à un tube ;
- une zone tubulaire dite flexible comportant un axe longitudinal, une première extrémité destinée à être emmanché dans une connexion d'un organe et une deuxième extrémité, opposée à la première extrémité le long dudit axe longitudinal, qui se prolonge par ledit embout, l'interface entre l'embout et la zone tubulaire flexible étant réalisée de manière étanche au fluide destiné à être véhiculé par le dispositif de raccord ;
- des éléments de renfort mécanique pour la zone tubulaire flexible, lesdits éléments de renfort mécanique étant d'un seul tenant avec l'embout, s'étendant principalement selon l'axe longitudinal de la zone tubulaire flexible sur au moins une partie de celle-ci depuis l'embout vers la première extrémité de la zone tubulaire flexible, et étant espacés les uns des autres sur la circonférence de ladite zone tubulaire flexible ;
l'embout et les éléments de renfort mécanique étant par ailleurs chacun réalisé en un matériau plus rigide que le matériau formant la zone tubulaire flexible.

Le dispositif pourra également présenter l'une au moins des caractéristiques suivantes, prise seule ou en combinaison :
- l'embout comporte une tubulure s'étendant selon l'axe longitudinal de la zone tubulaire flexible et définissant un diamètre externe plus faible que le diamètre externe défini par la zone tubulaire flexible, ledit tube étant destiné à être connecté à la tubulure ;
- l'embout comprend, en outre, une paroi annulaire externe entourant la tubulure, la tubulure et la paroi annulaire externe définissant une gorge annulaire située autour de ladite tubulure, ledit tube étant destiné à être connecté entre la tubulure et la paroi annulaire externe, dans la gorge annulaire ;
- les éléments de renfort mécanique sont répartis régulièrement sur la circonférence de la zone tubulaire flexible ;
- les éléments de renfort mécanique sont au moins au nombre de trois ;
- les éléments de renfort mécanique sont agencés sur la circonférence externe de la zone tubulaire flexible ;
- les éléments de renfort mécanique sont linéaires ;
- les éléments de renfort mécanique s'étendent depuis l'embout situé dans le prolongement de la deuxième extrémité de la zone tubulaire flexible vers la première extrémité de la zone tubulaire flexible sur une distance au moins égale à la demi-longueur de la zone tubulaire flexible, la longueur de la zone tubulaire flexible étant définie entre ses deux extrémités ;
- les éléments de renfort mécanique s'étendent d'une extrémité à l'autre de la zone tubulaire flexible ;
- l'embout et les éléments de renfort mécanique sont réalisés un matériau thermoplastique non élastomère, la zone tubulaire flexible est réalisée en un matériau thermoplastique élastomère, la partie thermoplastique de la zone tubulaire flexible est compatible chimiquement avec le thermoplastique de l'embout et des éléments de renfort mécanique ;
- il est prévu une colle au moins au niveau l'interface entre l'embout et la zone tubulaire flexible pour assurer l'étanchéité au fluide destiné à être véhiculé par le dispositif de raccord.

L'invention sera mieux comprise et d'autres buts, avantages et caractéristiques de celle-ci apparaîtront plus clairement à la lecture de la description qui suit et qui est faite au regard des figures annexées suivantes :
- La figure 2 est une vue en coupe transversale d'un dispositif de raccord conforme à l'invention ;
- La figure 3 est une vue en perspective du dispositif de raccord conforme à l'invention qui est représenté sur la figure 2 ;
- La figure 4 est une vue en perspective trois quarts du dispositif de raccord tel que représenté sur la figure 3, une fois la connexion de l'organe emmanchée à l'intérieur de ce dispositif avec un collier de serrage ;
- La figure 5, qui comprend les figures 5(a), 5(b) et 5(c), représente différents détails, nommés détails A, B et C de la figure 2 ;
- La figure 6 est une vue de côté (vue de droite) du dispositif de raccord conforme à l'invention tel que représenté sur la figure 2 ;
- La figure 7 représente une variante envisageable pour l'embout représenté sur la figure 5(b) et appartenant au dispositif de raccord conforme à l'invention ;
- La figure 8, qui comprend les figures 8(a) et 8(b), représente différentes sections envisageables, selon une vue en coupe partielle, pour des éléments de renfort d'une zone tubulaire flexible du dispositif de raccord conforme à l'invention ;
- La figure 9 représente, selon une vue en coupe partielle, une autre section et un autre agencement des éléments de renfort mécanique de la zone tubulaire flexible du dispositif de raccord conforme à l'invention.

Un dispositif de raccord 100 selon l'invention, destiné à véhiculer un fluide, est décrit à l'appui des figures annexées. Sur ces figures, un repère (O, X, Y, Z) orthonormé direct est représenté.

Le dispositif de raccord 100 comporte un embout 101 destiné à être connecté à un tube (non représenté dans le cadre de l'invention, mais analogue au tube T représenté sur la figure 1 de l'art antérieur).

Le dispositif de raccord 100 comporte également une zone tubulaire flexible 102 comportant un axe longitudinal AL, une première extrémité 102a destinée à être emmanché sur une connexion 301 d'un organe, par exemple un réservoir, comportant un fluide à véhiculer (non représenté dans le cadre de l'invention, mais analogue à celui de la figure selon l'art antérieur) et une deuxième extrémité 102b, opposée à la première extrémité le long dudit axe longitudinal AL, qui se prolonge par l'embout 101.

La zone tubulaire flexible 102 donne une certaine déformabilité permettant l'emmanchement sur la connexion 301.

Le dispositif de raccord 100 comporte, en outre, des éléments de renfort 103a, 103b, 103c, 103d, 103e, 103f, 103g et 103h mécanique pour la zone tubulaire flexible 102. Ces éléments de renfort 103a à 103h mécanique sont d'un seul tenant avec l'embout 101. Ces éléments de renfort 103a à 103h mécanique s'étendent selon l'axe longitudinal AL de la zone tubulaire flexible 102, sur au moins une partie de celle-ci, depuis l'embout 101, situé dans le prolongement de la deuxième extrémité 102b de la zone tubulaire flexible 102, vers la première extrémité 102a de la zone tubulaire flexible 102. Ces éléments de renfort mécanique 103a à 103h sont par ailleurs espacés les uns des autres sur la circonférence de ladite zone tubulaire flexible 102, avantageusement selon un motif régulier. Les éléments de renfort 103a à 103h mécanique ont notamment pour fonction de répartir, en utilisation, les efforts imprimés par le collier de serrage CS. Ils évitent par ailleurs, en utilisation, l'éclatement de la zone tubulaire flexible 102. Par ailleurs, l'embout 101 et les éléments de renfort 103a à 103h mécanique, d'un seul tenant, sont réalisés soit en un même matériau soit dans des matériaux différents, ce ou ces matériau(x) étant plus rigide(s) que le matériau formant la zone tubulaire flexible 102.

Le collier de serrage CS s'appuie sur les éléments de renfort 103a à 103h, plus rigides que la zone tubulaire flexible 102, pour assurer un maintien étanche de l'emmanchement de la connexion de l'organe dans le dispositif de raccord 100, cette connexion de l'organe étant également plus rigide que la zone tubulaire flexible 102. S'il n'y avait que la zone tubulaire flexible 102, le collier de serrage dégraderait la zone tubulaire flexible 102 et alors l'étanchéité ne serait plus assurée.

Par ailleurs, le fait que les éléments de renfort 103a à 103h s'étendent selon l'axe longitudinal AL de la zone tubulaire flexible 102 permet de placer le collier de serrage CS où l'on souhaite le long de cet axe, qui est également l'axe d'extension de la connexion 301 de l'organe.

De plus, le fait de prévoir un espacement entre les différents éléments de renfort mécanique 103a à 103h, c'est-à-dire d'avoir une alternance circonférentielle d'éléments de renfort et de parties non renforcées de la zone tubulaire flexible 102 permet, en utilisation, de répartir la force appliquée par le collier de serrage CS sur les différents éléments de renfort. Lorsque cet espacement entre les différents éléments de renfort mécanique 103a à 103h est réalisé selon un motif régulier, la répartition de la force appliquée par le collier de serrage CS est par ailleurs plus homogène. Incidemment, cela permet alors également de s'assurer d'une répartition plus homogène du comportement en flexibilité de la zone tubulaire flexible 102, sur cette même circonférence.

En outre, le fait de prévoir un embout 101 au sein même du dispositif de raccord 100 qui est d'un seul tenant avec les éléments de renfort 103a à 103h évite l'utilisation d'un autre collier de serrage.

Cela suppose toutefois, au moins, que l'interface entre l'embout 101 et la zone tubulaire flexible 102, soit réalisée de manière étanche au fluide destiné à être véhiculé par le dispositif de raccord 100.

En pratique, ceci peut être obtenu par collage, co-injection, activation de surface ou en prévoyant un moyen d'étanchéité complémentaire.

Avantageusement, cette étanchéité sera également obtenue entre les éléments de renfort 103a à 103h mécanique et la zone tubulaire flexible 102. Dans ce cas, un collage ou une co-injection est particulièrement bien adapté.

En cas de collage, on peut prévoir, au cours du processus de fabrication, une colle, par exemple un colle époxy ou cyanoacrylate, au moins au niveau de l'interface entre l'embout 101 et la zone tubulaire flexible 102 et avantageusement également entre les éléments de renfort 103a à 103h mécanique et la zone tubulaire flexible 102.

En cas de co-injection, il conviendra de choisir d'une part, une zone tubulaire flexible 102 réalisée en un matériau élastomère, éventuellement un copolymère, ou en un matériau thermoplastique élastomère et d'autre part, un embout 101 ainsi que des éléments de renfort 103a à 103h en un matériau thermoplastique plus rigide que le matériau formant la zone tubulaire flexible 102 (par exemple un thermoplastique non élastomère)). Dans ce cas, le matériau formant l'embout 101 et le matériau formant les éléments de renfort 103a à 103h d'une part et le matériau formant la zone tubulaire flexible 102 d'autre part, sont chimiquement compatibles.. Par exemple, on peut envisager que l'embout 101 et les éléments de renfort 103a à 103h soient réalisés en polypropylène (PP) et la zone tubulaire flexible 102 avec un élastomère copolymère EPDM - PP.

En cas d'activation de surface, on peut s'appuyer sur un procédé Corona ou plasma pour assurer une activation d'énergie en surface. Contrairement au cas du collage, on n'a alors pas besoin d'ajouter un matériau supplémentaire (colle). Par rapport au cas de la co-injection, il peut y avoir moins de contraintes sur la nature des matériaux. De manière générale, cette activation de surface améliore la cohésion finale entre deux matériaux à assembler.

Enfin, le moyen d'étanchéité complémentaire peut être un joint, par exemple un joint à lèvre ou un joint torique.

L'embout 101 pourra prévoir différentes formes.

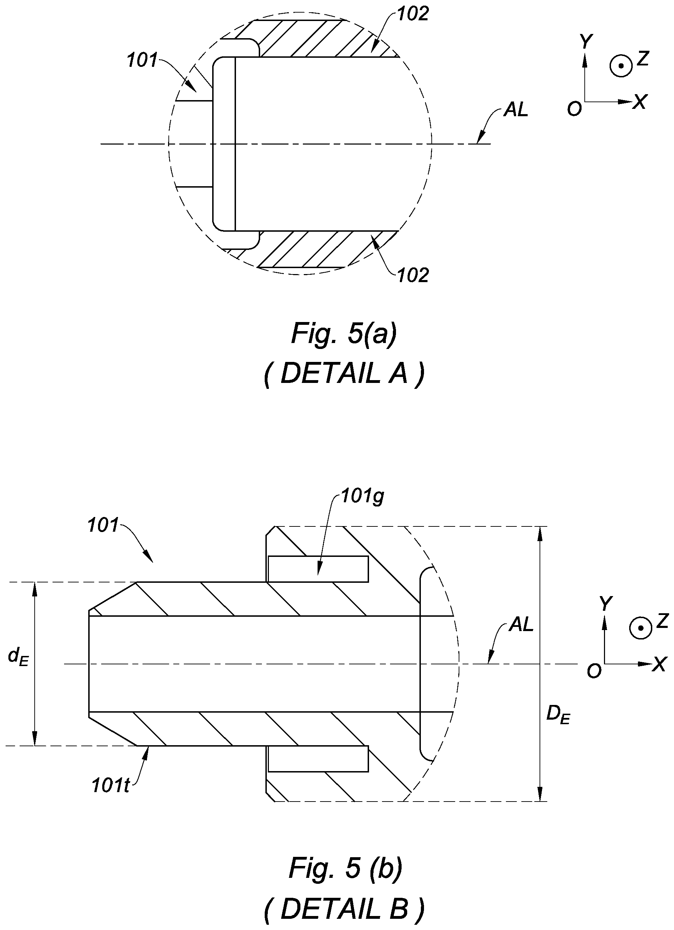

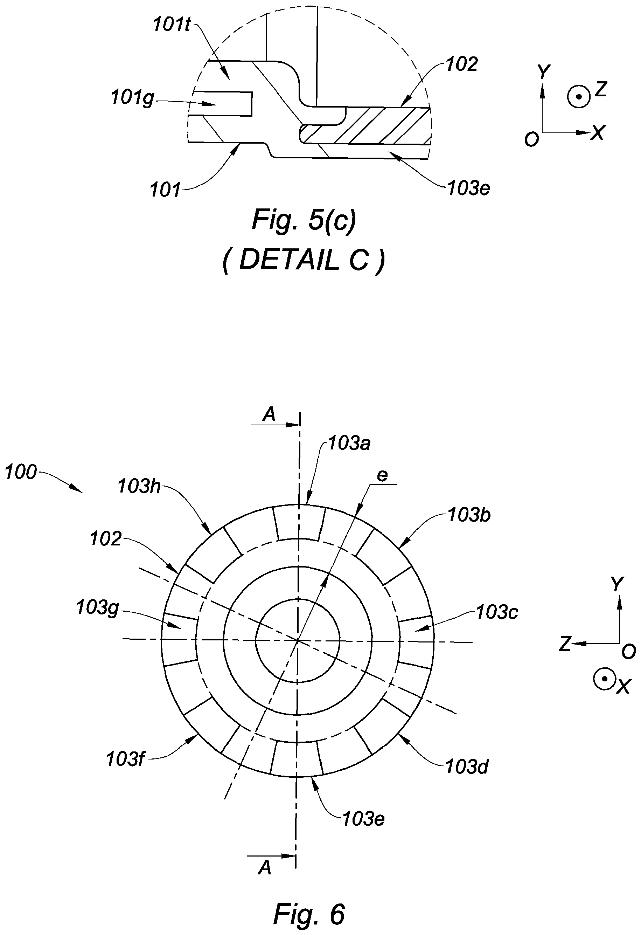

Une forme envisageable est représentée sur les figures 2 et 5(b).

Dans ce cas, l'embout 101 comprend une tubulure 101t s'étendant selon l'axe longitudinal AL de la zone tubulaire flexible 102 et définissant un diamètre externe d_{E} plus faible que le diamètre externe D_{E} défini par la zone tubulaire flexible 102 et une paroi annulaire externe 101e entourant la tubulure 101t, la tubulure 101t et la paroi annulaire externe 101e permettant de définir, entre elles, une gorge annulaire 101g autour de ladite tubulure 101t.

Avec cette réalisation, le tube est alors destiné à être connecté autour de la tubulure et dans la gorge annulaire. Il convient de noter que le fait de prévoir un embout 101 en un matériau thermoplastique est avantageux dans le cas où le tube est également un thermoplastique ou du moins comporte une partie thermoplastique car un soudage peut alors être effectué entre ce tube et l'embout 101.

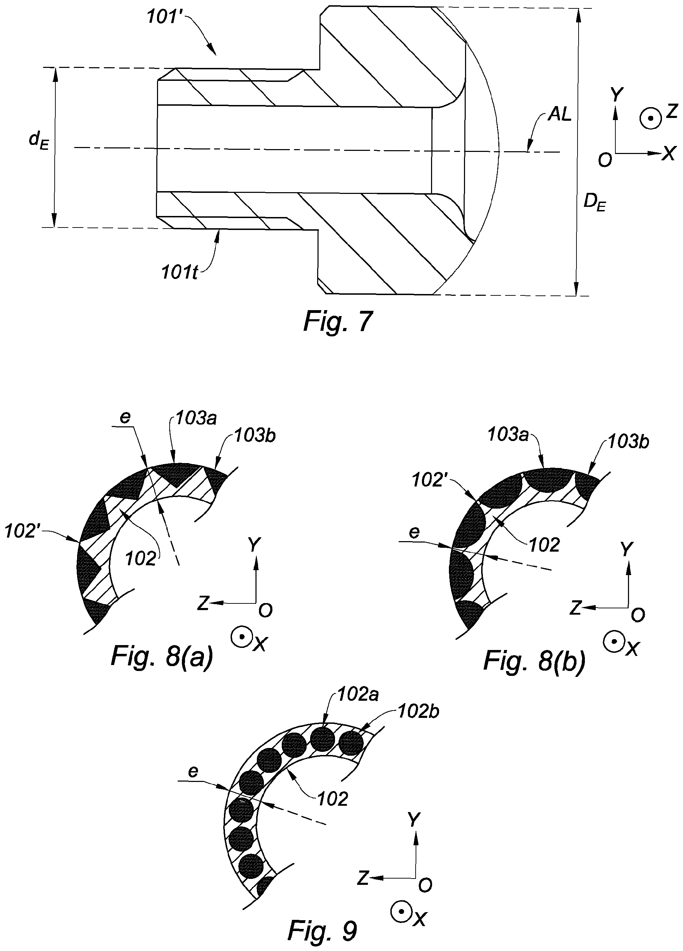

Une autre forme envisageable pour l'embout est représentée sur la figure 7.

Sur cette figure 7, l'embout 101' est conforme à l'embout 101 des figures 5(b) et 2, à l'exception du fait qu'il ne comporte pas de gorge annulaire 101g. Ainsi, l'embout 101' comporte une tubulure 101t s'étendant selon l'axe longitudinal AL de la zone tubulaire flexible 102 et définissant un diamètre externe d_{E} plus faible que le diamètre externe D_{E} défini par la zone tubulaire flexible 102. Dans cette variante de réalisation, le tube est alors simplement destiné à être connecté autour de la tubulure.

Plus généralement, il convient de noter que l'embout peut présenter différentes formes en fonction de l'utilisation envisagée.

Les éléments de renforts 103a à 103h peuvent présenter différentes conceptions.

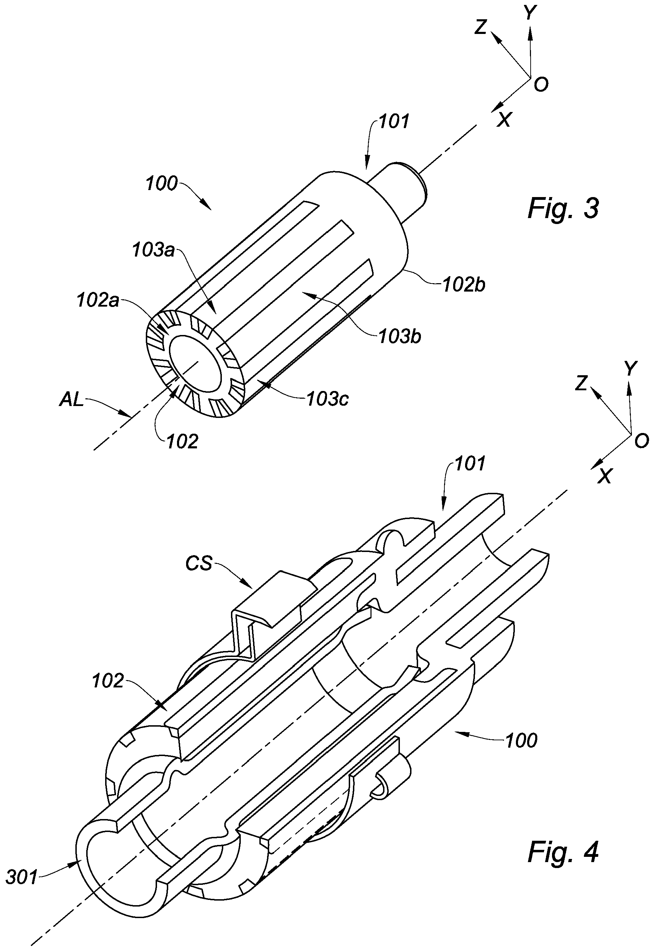

En effet, sur les figures 2 à 6, on a représenté une conception avantageuse de ces éléments de renfort mécanique.

Ils affleurent en effet sur la circonférence externe 102' de la zone tubulaire flexible 102, au nombre de huit, linéaires selon l'axe longitudinal AL de cette zone tubulaire flexible 102 et s'étendent par ailleurs d'une extrémité 102a à l'autre 102b de la zone tubulaire flexible 102.

Le fait d'agencer ces éléments de renfort sur la circonférence externe de la zone tubulaire flexible permet un contact direct avec le collier de serrage CS.

Le choix de huit ou plus éléments de renfort participe à l'homogénéisation du comportement mécanique de la zone tubulaire flexible 102 et participe également à une répartition plus homogène de l'effort que le collier de serrage est destiné à imprimer. En ce sens, cette caractéristique va dans le même sens que la mise en place d'un motif régulier des éléments de renfort mécanique 103a à 103h.

La linéarité des éléments de renfort mécanique 103a à 103h apporte de la simplicité et une fabrication plus aisée.

Enfin, le fait que ces éléments de renfort 103a à 103h s'étendent d'une extrémité 102 à l'autre 102b de la zone tubulaire flexible donne plus de liberté quant à la zone d'installation du collier de serrage.

Néanmoins, on peut prévoir des conceptions différentes.

Ainsi, lorsque l'on parle d'éléments de renfort mécanique espacés les uns des autres sur la circonférence de la zone tubulaire flexible 102 selon un motif régulier, il n'est pas nécessaire que l'étalement circonférentiel d'un élément de renfort soit identique à celui d'une partie non renforcée de la zone tubulaire flexible 102. De même, il n'est pas nécessaire que deux éléments de renfort 102a, 102b qui se succèdent sur la circonférence de la zone tubulaire flexible 102 soient identiques sur le plan de l'étalement circonférentiel. Dans ce cas, un motif régulier est alors obtenu en répétant un motif par exemple formé par deux éléments de renfort qui se suivent sur la circonférence de la zone tubulaire flexible 102. Dans tous les cas de motif régulier, l'idée reste de maintenir une symétrie radiale dans le comportement de la zone tubulaire flexible 102, munie de ses éléments de renfort mécanique.

Et plus généralement, un tel motif régulier n'a rien d'obligatoire, bien que cela soit avantageux.

Ainsi, et plus généralement, les éléments de renfort 103a à 103h mécanique pourront être au nombre d'au moins trois.

Par ailleurs, les éléments de renfort 103a à 103h mécanique pourront présenter une section de forme variée. Ainsi, sur la figure 8(a), les éléments de renfort mécanique présentent une section triangulaire. Sur la figure 8(b), les éléments de renfort mécanique présentent une section demi-ronde.

On relève que sur les réalisations décrites précédemment, les éléments de renfort mécanique 103a à 103h affleurent sur la circonférence externe 102' de la zone tubulaire flexible et présentent une extension radiale dans l'épaisseur e (prise radialement) de la zone tubulaire flexible 102. Toutefois, ils pourront être agencés autrement. C'est ce qui est représenté sur la figure 9, où les éléments de renfort mécanique sont agencés à l'intérieur de la zone tubulaire flexible 102, sans affleurer sur la circonférence externe 102' de la zone tubulaire flexible 102.

On relève au passage que la section d'un élément de renfort peut présenter une forme variée, par exemple trapézoïdale, ronde ou triangulaire.

Par ailleurs, dans tous les cas, les éléments de renfort 103a à 103h s'étendront selon l'axe longitudinal AL de la zone tubulaire flexible 102. Mais cette extension pourra être autre que linéaire. Plus généralement, on pourra prévoir que les éléments de renfort 103a à 103h s'étendent principalement selon l'axe longitudinal AL de la zone tubulaire flexible 102. Un exemple étant une forme en zig-zag en allant depuis l'embout 101, situé au niveau de la deuxième extrémité 102b de la zone tubulaire flexible 102, en direction de l'extrémité 102a opposée de la zone tubulaire flexible 102. Dans cet exemple, les éléments de renfort mécanique s'étendent effectivement principalement selon la direction de l'axe longitudinal AL de la zone tubulaire flexible, même si la forme en zig-zag implique une direction locale qui est à la fois circonférentielle et longitudinale.

Enfin, on pourra prévoir que les éléments de renfort 103a à 103h mécanique s'étendent depuis l'embout 101 situé dans le prolongement de la deuxième extrémité 102b de la zone tubulaire flexible 102 vers la première extrémité 102a de la zone tubulaire flexible 102 sur une distance au moins égale à la demi-longueur L/2 de la zone tubulaire flexible 102. La longueur L de la zone tubulaire flexible 102 est définie entre ses deux extrémités 102a, 102b (cf. figure 2). Ceci donne une certaine liberté pour le placement du collier de serrage tout en assurant une bonne étanchéité.

Il convient de noter qu'il a déjà été proposé dans le document US 3 825 036, un manchon comportant une zone tubulaire composite comportant un premier matériau et un deuxième matériau, différent du premier matériau, pour former des éléments de renfort mécanique plus rigides que le premier matériau de la zone tubulaire. Le but de cette conception est d'améliorer la résistance à l'élongation et à l'éclatement du manchon.

Il indique donc à l'homme du métier qu'il aurait été utile, dans ce but, de remplacer la zone tubulaire flexible du dispositif de raccord selon l'art antérieur qui est représenté sur la figure 1, par un manchon de ce type. Cela n'aurait cependant pas incité à l'homme du métier à intégrer un embout, rigide, au manchon, de surcroît en réalisant l'embout d'un seul tenant avec les éléments de renfort de la zone tubulaire, comme dans le cadre de l'invention, avec tous les avantages qui en découlent.

## Revendications

1. Dispositif de raccord (100) destiné à véhiculer un fluide, comportant :
- un embout (101, 101') destiné à être connecté à un tube ;
- une zone tubulaire dite flexible (102) comportant un axe longitudinal (AL), une première extrémité (102a) destinée à être emmanché dans une connexion (301) d'un organe et une deuxième extrémité (102b), opposée à la première extrémité le long dudit axe longitudinal (AL), qui se prolonge par ledit embout (101), l'interface entre l'embout (101) et la zone tubulaire flexible (102) étant réalisée de manière étanche au fluide destiné à être véhiculé par le dispositif de raccord ;
- des éléments de renfort (103a à 103h) mécanique pour la zone tubulaire flexible (102), lesdits éléments de renfort mécanique étant d'un seul tenant avec l'embout (101), s'étendant principalement selon l'axe longitudinal (AL) de la zone tubulaire flexible (102) sur au moins une partie de celle-ci depuis l'embout (101) vers la première extrémité (102a) de la zone tubulaire flexible (102), et étant espacés les uns des autres sur la circonférence de ladite zone tubulaire flexible (102) ;
l'embout (101) et les éléments de renfort (103a à 103h) mécanique étant par ailleurs chacun réalisé en un matériau plus rigide que le matériau formant la zone tubulaire flexible (102).

2. Dispositif de raccord (100) selon la revendication 1, dans lequel l'embout (101, 101') comporte une tubulure (101t) s'étendant selon l'axe longitudinal (AL) de la zone tubulaire flexible (102) et définissant un diamètre externe (d_{E}) plus faible que le diamètre externe (D_{E}) défini par la zone tubulaire flexible (102), ledit tube étant destiné à être connecté à la tubulure (101t).

3. Dispositif (100) de raccord selon la revendication précédente, dans lequel l'embout (101) comprend, en outre, une paroi annulaire externe (101e) entourant la tubulure (101t), la tubulure (101t) et la paroi annulaire externe (101e) définissant une gorge annulaire (101g) située autour de ladite tubulure (101t), ledit tube étant destiné à être connecté entre la tubulure (101t) et la paroi annulaire externe (101e), dans la gorge annulaire (101g).

4. Dispositif de raccord (100) selon l'une des revendications précédentes, dans lequel les éléments de renfort (103a à 103h) mécanique sont répartis régulièrement sur la circonférence de la zone tubulaire flexible (102).

5. Dispositif de raccord (100) selon l'une des revendications précédentes, dans lequel les éléments de renfort (103a à 103h) mécanique sont au moins au nombre de trois.

6. Dispositif de raccord (100) selon l'une des revendications précédentes, dans lequel les éléments de renfort (103a à 103h) mécanique sont agencés sur la circonférence externe de la zone tubulaire flexible (102).

7. Dispositif de raccord (100) selon l'une des revendications précédentes, dans lequel les éléments de renfort (103a à 103h) mécanique sont linéaires.

8. Dispositif de raccord (100) selon l'une des revendications précédentes, dans lequel les éléments de renfort (103a à 103h) mécanique s'étendent depuis l'embout (101) situé dans le prolongement de la deuxième extrémité (102b) de la zone tubulaire flexible (102) vers la première extrémité (102a) de la zone tubulaire flexible (102) sur une distance au moins égale à la demi-longueur de la zone tubulaire flexible (102), la longueur de la zone tubulaire flexible (102) étant définie entre ses deux extrémités (102a, 102b).

9. Dispositif de raccord (100) selon l'une des revendications précédentes, dans lequel les éléments de renfort (103a à 103h) mécanique s'étendent d'une extrémité à l'autre de la zone tubulaire flexible (102).

10. Dispositif de raccord (100) selon l'une des revendications précédentes, dans lequel :
- l'embout (101) et les éléments de renfort (103a à 103h) mécanique sont réalisés un matériau thermoplastique non élastomère ;
- la zone tubulaire flexible (102) est réalisée en un matériau thermoplastique élastomère ;
la partie thermoplastique de la zone tubulaire flexible (102) est compatible chimiquement avec le thermoplastique de l'embout (101) et des éléments de renfort mécanique (103a à 103h).

11. Dispositif de raccord (100) selon l'une des revendications 1 à 9, dans lequel il est prévu une colle au moins au niveau l'interface entre l'embout (101) et la zone tubulaire flexible (102) pour assurer l'étanchéité au fluide destiné à être véhiculé par le dispositif de raccord.

## Patentansprüche

1. Anschlussvorrichtung (100), die dazu bestimmt ist, eine Flüssigkeit zu fördern, die Folgendes umfasst:
- einen Ansatz (101, 101'), der dazu bestimmt ist, mit einer Röhre verbunden zu sein;
- eine röhrenförmige, biegsam genannte Zone (102), die eine Längsachse (AL), ein erstes Ende (102a), das dazu bestimmt ist, in einer Verbindung (301) eines Organs aufgeschrumpft zu sein, und ein zweites Ende (102b), das dem ersten Ende entlang der Längsachse (AL) entgegengesetzt ist, das sich durch den Ansatz (101) verlängert, umfasst, wobei die Schnittstelle zwischen dem Ansatz (101) und der biegsamen röhrenförmigen Zone (102) gegenüber der Flüssigkeit dicht ausgeführt ist, die dazu bestimmt ist, von der Anschlussvorrichtung gefördert zu werden;
- Elemente (103a bis 103h) zur mechanischen Verstärkung für die biegsame röhrenförmige Zone (102), wobei sich die Elemente zur mechanischen Verstärkung, die aus einem Stück mit dem Ansatz (101) bestehen, in der Hauptsache entlang der Längsachse (AL) der biegsamen röhrenförmigen Zone (102) auf mindestens einem Teil derselben ab dem Ansatz (101) zu dem ersten Ende (102a) der biegsamen röhrenförmigen Zone (102) erstrecken und auf dem Umfang der biegsamen röhrenförmigen Zone (102) voneinander beabstandet sind;
wobei der Ansatz (101) und die Elemente (103a bis 103h) zur mechanischen Verstärkung außerdem jeweils aus einem Material hergestellt sind, das starrer ist als das Material, das die biegsame röhrenförmige Zone (102) bildet.

2. Anschlussvorrichtung (100) nach Anspruch 1, wobei der Ansatz (101, 101') einen Rohrstutzen (101t) umfasst, der sich entlang der Längsachse (AL) der biegsamen röhrenförmigen Zone (102) erstreckt und einen Außendurchmesser (d_{E}) definiert, der kleiner ist als der Außendurchmesser (D_{E}), der von der biegsamen röhrenförmigen Zone (102) definiert ist, wobei die Röhre dazu bestimmt ist, mit dem Rohrstutzen (101t) verbunden zu sein.

3. Anschlussvorrichtung (100) nach dem vorstehenden Anspruch, wobei der Ansatz (101) weiter eine äußere ringförmige Wand (101e) umfasst, die den Rohrstutzen (101t) umgibt, wobei der Rohrstutzen (101t) und die äußere ringförmige Wand (101e) eine ringförmige Nut (101g) definieren, die um den Rohrstutzen (101t) liegt, wobei die Röhre dazu bestimmt ist, zwischen dem Rohrstutzen (101t) und der äußeren ringförmigen Wand (101e) in der ringförmigen Nut (101g) verbunden zu sein.

4. Anschlussvorrichtung (100) nach einem der vorstehenden Ansprüche, wobei die Elemente (103a bis 103h) zur mechanischen Verstärkung regelmäßig auf dem Umfang der biegsamen röhrenförmigen Zone (102) verteilt sind.

5. Anschlussvorrichtung (100) nach einem der vorstehenden Ansprüche, wobei die Elemente (103a bis 103h) zur mechanischen Verstärkung mindestens drei an der Zahl sind.

6. Anschlussvorrichtung (100) nach einem der vorstehenden Ansprüche, wobei die Elemente (103a bis 103h) zur mechanischen Verstärkung auf dem Außenumfang der biegsamen röhrenförmigen Zone (102) eingerichtet sind.

7. Anschlussvorrichtung (100) nach einem der vorstehenden Ansprüche, wobei die Elemente (103a bis 103h) zur mechanischen Verstärkung linear sind.

8. Anschlussvorrichtung (100) nach einem der vorstehenden Ansprüche, wobei sich die Elemente (103a bis 103h) zur mechanischen Verstärkung von dem Ansatz (101), der in der Verlängerung von dem zweiten Ende (102b) der biegsamen röhrenförmigen Zone (102) zu dem ersten Ende (102a) der biegsamen röhrenförmigen Zone (102) liegt, auf einer Entfernung erstrecken, die mindestens gleich der halben Länge der biegsamen röhrenförmigen Zone (102) ist, wobei die Länge der biegsamen röhrenförmigen Zone (102) zwischen ihren beiden Enden (102a, 102b) definiert ist.

9. Anschlussvorrichtung (100) nach einem der vorstehenden Ansprüche, wobei sich die Elemente (103a bis 103h) zur mechanischen Verstärkung von einem Ende zu dem anderen der biegsamen röhrenförmigen Zone (102) erstrecken.

10. Anschlussvorrichtung (100) nach einem der vorstehenden Ansprüche, wobei:
- der Ansatz (101) und die Elemente (103a bis 103h) zur mechanischen Verstärkung aus einem nicht-elastomeren thermoplastischen Material hergestellt sind;
- die biegsame röhrenförmige Zone (102) aus einem thermoplastischen Elastomermaterial hergestellt ist;
wobei der thermoplastische Teil der biegsamen röhrenförmigen Zone (102) chemisch mit dem Thermoplast des Ansatzes (101) und der Elemente (103a bis 103h) zur mechanischen Verstärkung kompatibel ist.

11. Anschlussvorrichtung (100) nach einem der Ansprüche 1 bis 9, wobei ein Klebstoff mindestens in dem Bereich der Schnittstelle zwischen dem Ansatz (101) und der biegsamen röhrenförmigen Zone (102) vorgesehen ist, um für die Dichtigkeit gegenüber der Flüssigkeit zu sorgen, die dazu bestimmt ist, von der Anschlussvorrichtung gefördert zu werden.

## Claims

1. Connection device (100) intended to convey a fluid, comprising:
- an endpiece (101, 101') intended to be connected to a tube;
- a so-called flexible tubular zone (102) comprising a longitudinal axis (AL), a first end (102a) intended to be fitted into a connection (301) of a member and a second end (102b), opposite the first end along said longitudinal axis (AL), which is extended by said endpiece (101), with the interface between the endpiece (101) and the flexible tubular zone (102) being carried out in a manner sealed to the fluid intended to be conveyed by the connection device;
- mechanical reinforcing elements (103a to 103h) for the flexible tubular zone (102), said mechanical reinforcing elements being integral with the endpiece (101), extending mainly along the longitudinal axis (AL) of the flexible tubular zone (102) over at least one portion of the latter from the endpiece (101) to the first end (102a) of the flexible tubular zone (102), and being spaced from one another over the circumference of said flexible tubular zone (102);
the endpiece (101) and the mechanical reinforcing elements (103a to 103h) moreover each being made from a material that is more rigid than the material that forms the flexible tubular zone (102).

2. Connection device (100) according to claim 1, wherein the endpiece (101, 101') comprises tubing (101t) that extends along the longitudinal axis (AL) of the flexible tubular zone (102) and which defines an outer diameter (d_{E}) that is smaller than the outer diameter (D_{E}) defined by the flexible tubular zone (102), said tube being intended to be connected to the tubing (101t).

3. Connection device (100) according to the preceding claim, wherein the endpiece (101) further comprises an outer annular wall (101e) surrounding the tubing (101t), the tubing (101t) and the outer annular wall (101e) defining an annular groove (101g) located around said tubing (101t), said tube being intended to be connected between the tubing (101t) and the outer annular wall (101e), in the annular groove (101g).

4. Connection device (100) according to one of the preceding claims, wherein the mechanical reinforcing elements (103a to 103h) are regularly distributed over the circumference of the flexible tubular zone (102).

5. Connection device (100) according to one of the preceding claims, wherein the mechanical reinforcing elements (103a to 103h) are at least three in number.

6. Connection device (100) according to one of the preceding claims, wherein the mechanical reinforcing elements (103a to 103h) are arranged on the outer circumference of the flexible tubular zone (102).

7. Connection device (100) according to one of the preceding claims, wherein the mechanical reinforcing elements (103a to 103h) are linear.

8. Connection device (100) according to one of the preceding claims, wherein the mechanical reinforcing elements (103a to 103h) extend from the endpiece (101) located in the extension of the second end (102b) of the flexible tubular zone (102) to the first end (102a) of the flexible tubular zone (102) over a distance at least equal to half the length of the flexible tubular zone (102), with the length of the flexible tubular zone (102) being defined between its two ends (102a, 102b).

9. Connection device (100) according to one of the preceding claims, wherein the mechanical reinforcing elements (103a to 103h) extend from one end to the other of the flexible tubular zone (102).

10. Connection device (100) according to one of the preceding claims, wherein:
- the endpiece (101) and the mechanical reinforcing elements (103a to 103h) are made from a non-elastomer thermoplastic material;
- the flexible tubular zone (102) is made from an elastomer thermoplastic material;
the thermoplastic portion of the flexible tubular zone (102) is chemically compatible with the thermoplastic of the endpiece (101) and of the mechanical reinforcing elements (103a to 103h).

11. Connection device (100) according to one of claims 1 to 9, wherein glue is provided at least at the interface between the endpiece (101) and the flexible tubular zone (102) to ensure the seal to the fluid intended to be conveyed by the connection device.
